(19) Europäisches Patentamt
European Patent Office
Office européen des brevets

(11) **EP 2 525 130 B1**

(12) **EUROPÄISCHE PATENTSCHRIFT**

(45) Veröffentlichungstag und Bekanntmachung des Hinweises auf die Patenterteilung:
**27.05.2015   Patentblatt 2015/22**

(51) Int Cl.:
*C08F 2/46* (2006.01)        *B29C 35/08* (2006.01)
*E03F 3/06* (2006.01)        *F16L 55/165* (2006.01)

(21) Anmeldenummer: **12003014.3**

(22) Anmeldetag: **28.04.2012**

(54) **Einlegeschlauch zum Auskleiden und Sanieren von Rohrleitungen und Kanälen, insbesondere von Abwasserkanälen**

Insert hose for cladding and retrofitting pipes and channels, in particular waste water channels

Tuyau d'insertion destiné à l'habillage et au nettoyage de conduites et de canaux, en particulier de canaux d'eaux usées

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2011   DE 102011102135**

(43) Veröffentlichungstag der Anmeldung:
**21.11.2012   Patentblatt 2012/47**

(73) Patentinhaber: **IMPREG GmbH**
**72119 Ammerbuch (DE)**

(72) Erfinder: **Papp, Robert**
**71159 Mötzingen (DE)**

(74) Vertreter: **Bartels & Partner**
**Lange Strasse 51**
**70174 Stuttgart (DE)**

(56) Entgegenhaltungen:
**EP-A1- 1 443 257        EP-A1- 2 226 184**
**DE-A1-102004 011 388    US-A1- 2011 083 765**

**Beschreibung**

Die Erfindung betrifft einen Einlegeschlauch zum Auskleiden und Sanieren von Rohrleitungen und Kanälen, insbesondere von Abwasserkanälen, gemäß dem Oberbegriff des Anspruchs 1.

Beschädigte Rohrleitungen oder Kanäle, insbesondere Abwasserkanäle oder zugehörige Rohrleitungen, können grundsätzlich durch Austausch der beschädigten Kanal- oder Rohrabschnitte rekonstruiert werden. Die damit verbundenen Kosten und Ausfallzeiten sind jedoch insbesondere bei unterirdischen Kanälen oder Rohrleitungen in vielen Fällen sehr hoch.

Aus diesem Grund wurde eine Technik entwickelt, bei der ein Einlegeschlauch in den zu rekonstruierenden Kanal eingezogen wird. Der Einlegeschlauch ist mit einer aushärtbaren Reaktionsmasse getränkt und wird nach dem Einziehen in den zu rekonstruierenden Kanal in Anlage an die Innenseite des Kanals gebracht. Anschließend wird die Reaktionsmasse ausgehärtet und der ausgehärtete Einlegeschlauch bildet eine flüssigkeitsdichte und in der Regel auch gasdichte Rohrleitung im Innern des Kanals.

Derartige Einlegeschläuche sind beispielsweise aus der WO 00/50801 A2 bekannt. Der bekannte Einlegeschlauch weist mehrere Lagen auf, die jeweils aus Glasfasern gebildet sind und mit einem aushärtbaren Harz getränkt sind. Typische Längen derartiger Einlegeschläuche betragen zwischen 30 und 60 m, können aber auch bis zu 250 m und mehr betragen. Der Durchmesser der zu rekonstruierenden Kanäle beträgt typisch zwischen 100 und 1200 mm, kann aber auch mehr oder weniger betragen. Mit den bekannten Einlegeschläuchen lassen sich Kanäle in sehr hoher Qualität rekonstruieren und im ausgehärteten Zustand weisen die Einlegeschläuche eine extrem hohe chemische und mechanische Resistenz auf.

Das Aushärten bzw. die Polymerisation der Reaktionsmasse kann unmittelbar thermisch erfolgen, beispielsweise indem der Einlegeschlauch unter Druck gesetzt wird und mit Heißdampf so lange befüllt wird, bis der Einlegeschlauch ausgehärtet ist. Alternativ hierzu kann die Reaktionsmasse bei Einsatz geeigneter Harze auch mit UV-haltiger Strahlung ausgehärtet werden, wie dies beispielsweise in der DE 35 46 417 A1 beschrieben ist. Hierzu wird eine UV-Strahlenquelle langsam durch den aufgeblasenen Einlegeschlauch gezogen, bis der Einlegeschlauch ausgehärtet ist.

Bei großen Schlauch- bzw. Schichtdicken werden der Reaktionsmasse gemäß der DD 133 953 Gemische aus Photosensibilatoren und organischen Peroxiden zugegeben, um auch auf der strahlungsabgewandten Seite des Einlegeschlauches eine vollständige Aushärtung zu erreichen. Die von der UV-Bestrahlung initiierte Polymerisation, bei der Wärme entsteht, wird durch den Zerfall des Peroxids und die dadurch entstehende Freisetzung von Radikalen auch in jenen Bereichen des Einlegeschlauches die Polymerisation ausgelöst, die nicht oder nicht in ausreichender Weise von der UV-Strahlung erreicht werden. Dabei handelt es sich - wie auch bei der thermisch initiierten Polymerisation üblich - um einen selbstverstärkenden Effekt, da die Polymerisation als exotherme Reaktion die Wärme für den weiteren Zerfall des Peroxids bereitstellt.

Aus der EP 1 443 257 A1 ist ein Einlegeschlauch mit den Merkmalen des Oberbegriffs des Patentanspruchs 1 bekannt.

Der Erfindung liegt die Aufgabe zugrunde, einen Einlegeschlauch bereitzustellen, der hinsichtlich Wirtschaftlichkeit und Funktionalität noch weiter verbessert ist. In einer Ausführungsart sollen auch bei großen Wandstärken des Einlegeschlauches von beispielsweise mehr als 10 cm und bei einer hohen chemischen und/oder mechanischen Resistenz die Herstellungskosten für den Einlegeschlauch reduziert sein. In einer weiteren Ausführungsart sollen die Verlegeeigenschaften des Einlegeschlauches weiter verbessert sein.

Diese Aufgabe ist durch den im Anspruch 1 bestimmten Einlegeschlauch gelöst. Besondere Ausführungsarten der Erfindung sind in den Unteransprüchen bestimmt.

In einer Ausführungsart weist der Einlegeschlauch zum Auskleiden und Sanieren von Rohrleitungen und Kanälen mindestens eine, vorzugsweise mehrere Glasfaserlagen auf, die mit einer durch UV (Ultraviolett)-haltige Strahlen aushärtbaren Reaktionsmasse getränkt sind. Bei den Glasfasern kann es sich insbesondere um so genannte "E-CR"-Fasern handeln, die sich durch eine erhöhte chemische Resistenz auszeichnen. Derartige Glasfasern bestehen beispielsweise aus 58,4 Gew.% $SiO_2$, 21,4 % CaO und 11,1 % $Al_2O_3$. Weitere Anteile können MgO (2,7 %), ZnO (2,7 %), $TiO_2$ (2,4 %), $Na_2O$ (0,8 %) und $K_2O$ (0,1 %) sein. Die Glasfasern können insbesondere borfrei sein. Die E-CR-Glasfasern können der DIN EN ISO 2078 entsprechen, welche wiederum den Anforderungen der DIN 14020-1, DIN EN 14020-2 und DIN EN 1420-3 entsprechen können.

Die Reaktionsmasse kann im Wesentlichen aus Kunstharzen bestehen, beispielsweise ungesättigten Polyesterharzen auf der Basis Isophtalsäure (ISO-NPG) und/oder Orthophtalsäure (ORTHO-NPG) nach DIN 18820-1, Tabelle 1, Gruppe 3 des Typs 1140 nach Tabelle 3 DIN 16946-2.

Auf die Glasfasern ist eine Schlichte aufgebracht, die u. a. die Aufgabe haben kann, die Fasern gegenseitig zu schützen, insbesondere zu verhindern, dass sie durch gegenseitiges Reiben beschädigt werden.

Die Schlichte kann dabei durch Sprühen oder Tauchen auf die Glasfasern aufgebracht werden. Ein mit einer Schlichte versehene Glasfaser ist geschmeidiger und widerstandsfähiger gegen mechanische Belastung.

Die Besonderheit der vorliegenden Erfindung liegt darin, dass durch Verwendung einer solchen Schlichte auf den Glasfasern der Absorptionskoeffizient alpha der mit Reaktionsmasse getränkten Glasfaserlage für die UV-haltigen Strahlen derart herabgesetzt ist, dass auch mit einer Reaktionsmasse, die keine Peroxide aufweist, eine Durchhärtung des Einlegeschlauches allein durch Bestrahlen mit den UV-haltigen Strahlen erreicht werden kann, und zwar auch dann, wenn die Schlauchdicke mehr als 10 mm beträgt, beispielsweise 12 bis 14 mm oder mehr beträgt.

Der Absorptionskoeffizient ist ein Maß dafür, wie stark die UV-haltigen Strahlen von dem Einlegeschlauch absorbiert werden. Für die im Einlegeschlauch nach einer Eindringtiefe x noch vorhandene Intensität I(x) gilt bezogen auf die eingestrahlte Intensität $I_0$ der UV-Strahlung:

$$I(x) / I_0 = e^{-(alpha \cdot x)}$$

Wie durch Untersuchungen herausgefunden wurde, wird die Absorption der UV-haltigen Strahlung in dem noch nicht ausgehärteten Einlegeschlauch nicht oder jedenfalls nicht nur von dem Absorptionskoeffizienten der Reaktionsmasse einerseits und den Glasfasern andererseits bestimmt, sondern maßgeblich auch von der Absorption im Bereich des Übergangs zwischen Reaktionsmasse und Glasfaser. Es ist das Besondere an der vorliegende Erfindung, dass die Durchdringung des Einlegeschlauches mit den UV-haltigen Strahlen nicht durch eine Variation der Reaktionsmasse oder einer Veränderung des Werkstoffes der Glasfasern erreicht wird, sondern durch die Verwendung einer geeigneten Schlichte auf den Glasfasern.

Die Reaktionsmasse weist beispielsweise ein ungesättigtes Polyesterharz und Styrol auf. Die Schlichte weist eine erhöhte Löslichkeit in der Reaktionsmasse auf, insbesondere eine erhöhte Löslichkeit durch das Styrol. So ist beispielsweise die Löslichkeit (solubility) einer erfindungsgemäßen Schlichte in der Reaktionsmasse gegenüber einer Vergleichsprobe, bei welcher Advantex-Glasfasern der Firma 3B-The Fiber Glass Company, 4651 Battice, Belgien mit ungesättigten Polyesterharzen auf der Basis Isophtalsäure und/oder Orthophtalsäure getränkt wurden, um mindestens 15 %, insbesondere mindestens 25 % und vorzugsweise mindestens 40 % erhöht.

In einer Ausführungsart ist der durch ein Lösungsmittel, insbesondere durch Aceton, lösbare Materialanteil der Schlichte reduziert. So ergibt sich gegenüber einer Vergleichsprobe mit Advantex-Glasfasern der Firma 3B-The Fiber Glass Company ein um mindestens 10 %, insbesondere mindestens 15 % und vorzugsweise mindestens 20 % reduzierter lösbarer Materialanteil (Aceton extraction) der erfindungsgemäßen Schlichte.

Dadurch wird die Absorption der UV-Strahlen am Übergang zwischen Reaktionsmasse und Glasfasern reduziert.

Die Löslichkeit der Schlichte in der Reaktionsmasse (solubility) und der lösbare Materialanteil (Aceton extraction) sind ein Maß für die Geschwindigkeit, mit welcher sich die Schlichte durch das Monomer des Harzes, beispielsweise Styrol, gelöst wird. Bei der erfindungsgemäßen Schlichte ist diese Geschwindigkeit erhöht und dadurch ist der Absorptionskoeffizient für die UV-haltigen Strahlen reduziert.

In einer Ausführungsart beträgt der Anteil organischer Stoffe auf den die Schlichte aufweisenden Glasfasern weniger als 1,2 %, insbesondere weniger als 1,0 % und vorzugsweise weniger als 0,8 %. Durch diesen vergleichsweise geringen und insbesondere gegenüber der vorstehend genannten Vergleichsprobe reduzierten Anteil an organischen Stoffen auf dem Glas ist der Absorptionskoeffizient für die UV-haltigen Strahlen weiter reduziert.

In einer Ausführungsart ist der Absorptionskoeffizient alpha des Einlegeschlauches im Wellenlängenbereich zwischen 300 und 500 nm, insbesondere zwischen 330 und 460 nm und vorzugsweise zwischen 360 und 420 nm, kleiner als 250 1/m, insbesondere kleiner als 200 1/m und vorzugsweise weniger als 150 1/m. Durch diesen vergleichsweise geringen Absorptionskoeffizienten ist auch nach einer Eindringtiefe von beispielsweise 10 mm noch eine ausreichende Intensität der UV-haltigen Strahlen vorhanden, um das Aushärten des Einlegeschlauches zu bewirken.

In einer Ausführungsart weist die Schlichte einen Haftvermittler auf, beispielsweise mindestens ein organofunktionelles Silan, mit einem Anteil von mehr als 0,1 und weniger als 2,0 %, insbesondere mehr als 0,2 und weniger als 1,5 % und vorzugsweise mehr als 0,3 und weniger als 1,0 %, bezogen auf die Masse der Schlichte. Durch die Verwendung eines solchen Haftvermittlers ist die Kraftübertragung zwischen dem Harz und dem Glas verbessert. Der Haftvermittler erhöht insbesondere die Adhäsion der Polymere des Harzes an der Oberfläche der Glasfaser.

In einer Ausführungsart weist die Schlichte ein Netzmittel auf, um durch Herabsetzen der Oberflächenspannung die Benetzung der Glasfasern mit der Schlichte zu verbessern. Als Netzmittel kommen beispielsweise Polyfettsäurenamide mit einem Anteil von 0,05 bis 2,0 Gew.% oder Polyvinylpyrrolidon mit einem Anteil von 0,01 bis 0,15 %, jeweils bezogen auf die Masse der Schlichte, in Betracht.

Die zum Aushärten des Einlegeschlauches verwendeten UV-haltigen Strahlen weisen ein Spektrum zwischen 300 und 500 nm auf, insbesondere zwischen 330 und 460 nm und vorzugsweise zwischen 360 und 420 nm. Beispielsweise liegen mehr als 80 %, insbesondere mehr als 90 % und vorzugsweise mehr als 95 %, der Energie der ausgesandten Strahlung in diesem Wellenbereich. Die Leistungsdichte auf der bestrahlten Oberfläche des Einlegeschlauches kann beispielsweise zwischen 200 und 6.000 W/m² betragen, insbesondere zwischen 400 und 4.000 W/m² und vorzugsweise zwischen 600 und 2.000 W/m².

Die vorliegende Erfindung betrifft auch eine sanierte Rohrleitung oder einen sanierten Kanal, die bzw. der mit einem durch UV-haltige Strahlen ausgehärteten Einlegeschlauch wie vorstehend beschrieben ausgekleidet ist.

Weitere Vorteile, Merkmale und Einzelheiten der Erfindung ergeben sich aus den Unteransprüchen und der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.

Fig. 1     zeigt einen Längsschnitt durch einen erfindungsgemäßen Einlegeschlauch und eine damit ausgekleidete und sanierte Rohrleitung, und

Fig. 2     zeigt in vergrößerter Darstellung einen Querschnitt durch den Einlegeschlauch längs der Glasfasern.

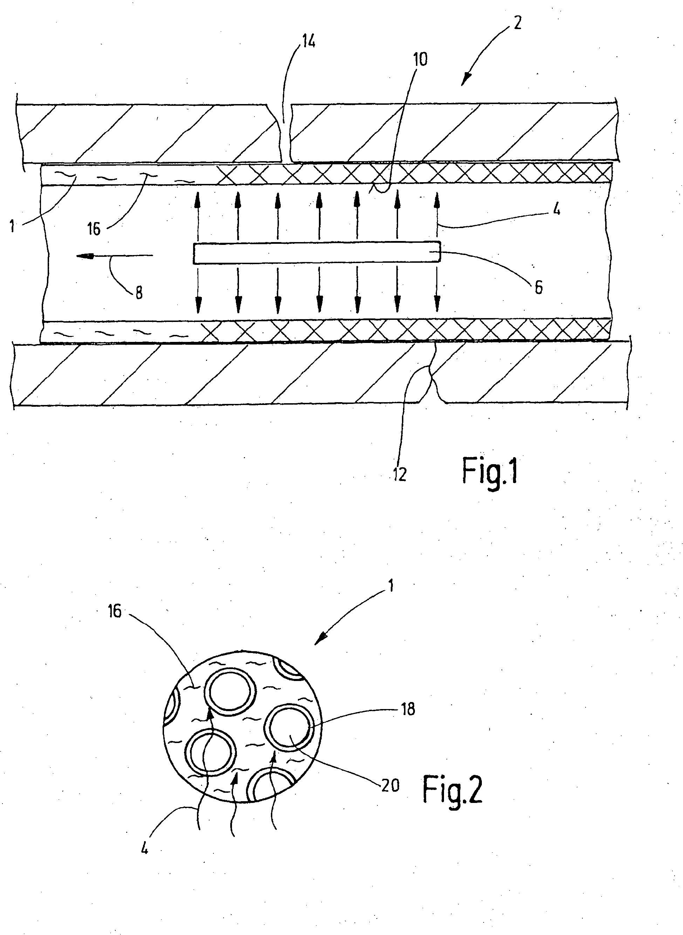

Die Fig. 1 zeigt einen Längsschnitt durch einen erfindungsgemäßen Einlegeschlauch 1 und eine damit ausgekleidete und sanierte Rohrleitung 2. Bei der Rohrleitung handelt es sich um einen Abwasserkanal. Es ist der Zustand dargestellt, in dem der Einlegeschlauch 1 beispielsweise durch Druckbeaufschlagung in Anlage an die Innenwand der Rohrleitung 2 gebracht ist.

Der Einlegeschlauch 1 ist mit einer aushärtbaren Reaktionsmasse 16 getränkt, wobei in der linken Bildhälfte der Fig. 1 der Einlegeschlauch 1 noch nicht ausgehärtet ist, und in der rechten Bildhälfte der Fig. 1 der Einlegeschlauch 1 bereits ausgehärtet ist. Die Rohrleitung 2 weist Bruchstellen 12 oder Löcher 14 auf und wird durch die Auskleidung mit dem Einlegeschlauch 1 saniert, d. h. wieder in einen funktionsfähigen Zustand versetzt.

Das Aushärten der Reaktionsmasse 16 erfolgt durch Bestrahlen mit UV-haltigen Strahlen 4 in einem Wellenlängenbereich von 300 bis 500 nm, insbesondere 360 bis 420 nm. Die UV-haltigen Strahlen 4 werden von einer oder mehreren UV-Strahlungsquellen 6 emittiert. Die UV-Strahlungsquellen 6 werden auf einem gegebenenfalls auch mit Rollen versehenen Gestell im Wesentlichen zentrisch innerhalb des Einlegeschlauches 1 bzw. der Rohrleitung 2 in Richtung des Pfeils 8 verschoben. Die UV-Strahlungsquellen 6 können dabei mehrere hundert Watt Leistung aufweisen, und sowohl die Leistung der einzelnen UV-Strahlungsquellen 6 als auch die Anzahl der UV-Strahlungsquellen 6 kann entsprechend der lichten Weite der Rohrleitung 2 gewählt werden, beispielsweise derart, dass auf der Innenseite 10 des Einlegeschlauchs 1 eine Leistungsdichte von 600 bis 2.000 $W/m^2$ gegeben ist.

Die Fig. 2 zeigt in vergrößerter Darstellung einen Querschnitt durch den Einlegeschlauch 1 längs der Glasfasern 20, welche in die im Ausführungsbeispiel durch ein ungesättigtes Polyesterharz gebildete Reaktionsmasse 16 eingebettet sind. Jede Glasfaser 20 ist dabei durch eine Schlichte 18 ummantelt, wobei der in der Fig. 2 dargestellte Zustand dem anfänglichen Zustand beim Tränken der Glasfaserlagen mit der Reaktionsmasse 16 entspricht. Nach einer vergleichsweise kurzen Zeit löst sich mindestens ein Teil der Schlichte 18 in der Reaktionsmasse 16, wodurch die Absorption der UV-haltigen Strahlen 4 beim anschließenden Bestrahlen reduziert ist. Dadurch ist nicht nur nahe der Innenseite 10 (Fig. 1) des Einlegeschlauches 1 die Reaktionsmasse 16 aushärtbar, sondern auch es dringen auch genügend UV-haltige Strahlen 4 in jenen Bereich des Einlegeschlauches 1, welcher der Rohrleitung 2 zugewandt ist, so dass auch in diesem Bereich eine vollständige Durchhärtung des Einlegeschlauches 1 gewährleistet ist. Der Absorptionskoeffizient alpha für die UV-haltigen Strahlen 4 beträgt im Ausführungsbeispiel etwa 150 1/m, so dass in einer Tiefe von 15 mm gemessen ab der Innenseite 10 des Einlegeschlauches noch etwa 10,5 % der auf der Innenseite 10 eingestrahlten Leistung vorhanden ist.

## Patentansprüche

**1.** Einlegeschlauch (1) zum Auskleiden und Sanieren von Rohrleitungen (2) und Kanälen, insbesondere von Abwasserkanälen, wobei der Einlegeschlauch (1) mindestens eine, vorzugsweise mehrere Lagen aus Glasfasern (20) aufweist, die mit einer aushärtbaren Reaktionsmasse (16) getränkt sind, **dadurch gekennzeichnet, dass** die Reaktionsmasse (16) peroxidfrei und durch UV-haltige Strahlen (4) aushärtbar ist, dass die Schlauchdicke des Einlegeschlauches (1) mehr als 10 mm beträgt, und dass durch die Verwendung einer geeigneten Schlichte (18) auf den Glasfasern (20) der Absorptionskoeffizient alpha des Einlegeschlauches (1) für die UV-haltigen Strahlen (4) derart herabgesetzt ist, dass die peroxidfreie Reaktionsmasse (16) und damit der Einlegeschlauch (1) durch die UV-haltigen Strahlen (4) vollständig aushärtbar ist.

**2.** Einlegeschlauch (1) nach Anspruch 1, **dadurch gekennzeichnet, dass** die Reaktionsmasse (16) ein Harz, insbesondere ein ungesättigtes Polyestherharz, und Styrol aufweist, und dass die Schlichte (18) eine erhöhte Löslichkeit in der Reaktionsmasse (16) aufweist, insbesondere eine erhöhte Löslichkeit durch das Styrol.

**3.** Einlegeschlauch (1) nach Anspruch 1 oder einem der vorangehenden Ansprüche, **dadurch gekennzeichnet, dass** der durch ein Lösungsmittel, insbesondere Aceton, lösbare Materialanteil der Schlichte (18) reduziert ist.

**4.** Einlegeschlauch (1) nach Anspruch 1 oder einem der vorangehenden Ansprüche, **dadurch gekenn-**

zeichnet, dass der Anteil organischer Stoffe auf den die Schlichte (18) aufweisenden Glasfasern (20) weniger als 1,2 % beträgt, insbesondere weniger als 1,0 % und vorzugsweise weniger als 0,8 %.

5. Einlegeschlauch (1) nach Anspruch 1 oder einem der vorangehenden Ansprüche, **dadurch gekennzeichnet, dass** der Absorptionskoeffizient alpha des Einlegeschlauches (1) im Wellenlängenbereich zwischen 300 und 500 nm, insbesondere zwischen 330 und 460 nm, und vorzugsweise zwischen 360 und 420 nm bei Raumtemperatur weniger als 250 1/m beträgt, insbesondere weniger als 200 1/m und vorzugsweise weniger als 150 1/m.

6. Einlegeschlauch (1) nach Anspruch 1 oder einem der vorangehenden Ansprüche, **dadurch gekennzeichnet, dass** die Schlichte (18) einen Haftvermittler aufweist, beispielsweise mindestens ein organofunktionelles Silan, mit einem Anteil von mehr als 0,1 und weniger als 2,0 %, insbesondere mehr als 0,2 und weniger als 1,5 % und vorzugsweise mehr als 0,3 und weniger als 1,0 %, bezogen auf die Masse der Schlichte (18).

7. Einlegeschlauch (1) nach Anspruch 1 oder einem der vorangehenden Ansprüche, **dadurch gekennzeichnet, dass** die Schlichte (18) ein Netzmittel aufweist, um durch Herabsetzen der Oberflächenspannung die Benetzung der Glasfasern (20) mit der Schlichte (18) zu verbessern, beispielsweise Polyfettsäureamide, mit einem Anteil von 0,05 bis 2,0 Gew. % oder Polyvinylpyrrolidon mit einem Anteil von 0,01 bis 0,15 %, jeweils bezogen auf die Masse der Schlichte (18).

8. Einlegeschlauch (1) nach Anspruch 1 oder einem der vorangehenden Ansprüche, **dadurch gekennzeichnet, dass** die UV-haltigen Strahlen (4) eine Wellenlänge von mehr als 300 und weniger als 500 nm aufweisen, insbesondere mehr als 330 und weniger als 460 nm, vorzugsweise mehr als 360 und weniger als 420 nm.

9. Sanierte Rohrleitung (2) oder sanierter Kanal, **dadurch gekennzeichnet, dass** die Rohrleitung (2) oder der Kanal mit einem durch UV-haltige Strahlen (4) ausgehärteten Einlegeschlauch (1) nach einem der vorangehenden Ansprüche ausgekleidet ist.

**Claims**

1. An insert hose (1) for cladding and retrofitting pipes (2) and channels, in particular waste water channels, the insert hose (1) having at least one, preferably a number of layers consisting of glass fibres (20) that are soaked with a curable reaction compound (16), **characterised in that** the reaction compound (16) is peroxide-free and can be cured by rays (4) containing UV, that the thickness of the insert hose (1) is more than 10 mm, and that by using a suitable coating (18) on the glass fibres (20), the absorption coefficient alpha of the insert hose (1) is reduced for the rays (4) containing UV such that the peroxide-free reaction compound (16), and so the insert hose (1), can be fully hardened by the rays (4) containing UV.

2. The insert hose (1) according to Claim 1, **characterised in that** the reaction compound (16) has a resin, in particular an unsaturated polyester resin, and styrene, and that the coating (18) has increased solubility in the reaction compound (16), in particular increased solubility through the styrene.

3. The insert hose (1) according to Claim 1 or any of the preceding claims, **characterised in that** the material portion of the coating (18) that can be dissolved by a solvent, in particular by acetone, is reduced.

4. The insert hose (1) according to Claim 1 or any of the preceding claims, **characterised in that** the portion of organic materials in the glass fibres (20) that have the coating (18) is less than 1.2 %, in particular less than 1.0 %, and preferably less than 0.8 %.

5. The insert hose (1) according to Claim 1 or any of the preceding claims, **characterised in that** the absorption coefficient alpha of the insert hose (1) is in the wavelength range between 300 and 500 nm, in particular between 330 and 460 nm, and preferably between 360 and 420 nm at ambient temperature is less than 250 1/m, in particular less than 200 1/m, and preferably less than 150 1/m.

6. The insert hose (1) according to Claim 1 or any of the preceding claims, **characterised in that** the coating (18) has a bonding agent, for example at least one organofunctional silane, with a portion of more than 0.1 and less than 2.0 %, in particular more than 0.2 and less than 1.5 %, and preferably more than 0.3 and less than 1.0 %, in relation to the mass of the coating (18).

7. The insert hose (1) according to Claim 1 or any of the preceding claims, **characterised in that** the coating (18) has a wetting agent in order to improve the wetting of the glass fibres (20) with the coating (18) by reducing the surface tension, for example poly fatty acid amides with a portion of 0.05 to 2.0 % by weight or polyvinylpyrrolidone with a portion of 0.01 to 0.15 %, respectively in relation to the mass of the coating (18).

8. The insert hose (1) according to Claim 1 or any of the preceding claims, **characterised in that** the rays containing UV (4) have a wavelength of more than 300 and less than 500 nm, in particular more than 330 and less than 460 nm, preferably more than 360 and less than 420 nm.

9. A retrofitted pipe (2) or a retrofitted channel, **characterised in that** the pipe (2) or the channel is clad with an insert hose (1) hardened by rays (4) containing UV according to any of the preceding claims.

**Revendications**

1. Tuyau (1) souple d'insertion pour habiller et rénover des canalisations (2) et des conduits, notamment des conduits d'eau résiduaire, le tuyau (1) souple d'insertion ayant au moins une couche, de préférence plusieurs couches de fibres (20) de verre, qui sont imprégnées d'une substance (16) réactionnelle durcissable, **caractérisé en ce que** la substance (16) réactionnelle est exempte de peroxyde et peut être durcie par des rayonnements (4) contenant des UV, **en ce que** l'épaisseur du tuyau (1) souple d'insertion est plus grande que 10 mm et **en ce que** par l'utilisation d'un enduit (18) approprié sur les fibres (20) de verre, le coefficient d'absorption alpha des rayonnements (4) contenant des UV par le tuyau (1) souple d'insertion peut être abaissé de manière à ce que la substance (16) réactionnelle exempte de peroxyde ainsi que le tuyau (1) souple d'insertion puisse être durcis complètement par les rayonnements (4) contenant des UV.

2. Tuyau (1) souple d'insertion suivant la revendication 1, **caractérisé en ce que** la substance (16) réactionnelle comporte une résine, notamment une résine de polyester insaturée, et du styrène, et **en ce que** l'enduit (18) a une solubilité augmentée dans la substance (16) réactionnelle, notamment une solubilité augmentée par le styrène.

3. Tuyau (1) souple d'insertion suivant la revendication 1 ou l'une des revendications précédentes, **caractérisé en ce que** la proportion de matière soluble de l'enduit (18) est réduite par un solvant, notamment par de l'acétone.

4. Tuyau (1) souple d'insertion suivant la revendication 1 ou l'une des revendications précédentes, **caractérisé en ce que** la proportion de matières organiques sur les fibres (20) de verre ayant l'enduit (18) est plus petite que 1,2%, notamment plus petite que 1,0% et, de préférence, plus petite que 0,8%.

5. Tuyau (1) souple d'insertion suivant la revendication 1 ou l'une des revendications précédentes, **caractérisé en ce que** le coefficient d'absorption alpha du tuyau (1) souple d'insertion dans le domaine de longueur d'ondes compris entre 300 et 500 nm, notamment entre 330 et 460 nm, et de préférence entre 360 et 420 nm, à la température ambiante est plus petit que 250 1/m, notamment plus petit que 200 1/m et, de préférence, plus petit que 150 1/m.

6. Tuyau (1) souple d'insertion suivant la revendication 1 ou l'une des revendications précédentes, **caractérisé en ce que** l'enduit (18) a un adhésif, par exemple au moins un silane organofonctionnel, en une proportion de moins de 2,0%, notamment de plus de 0,2 et de moins de 1,5% et, de préférence, de plus de 0,3 et de moins de 1,0% rapportée à la masse de l'enduit (18).

7. Tuyau (1) souple d'insertion suivant la revendication 1 ou l'une des revendications précédentes, **caractérisé en ce que** l'enduit (18) comporte un agent adhésif pour améliorer, en abaissant la tension superficielle, le mouillage des fibres (20) de verre par l'enduit (18), par exemple des polyamides d'acide gras, en une proportion de 0,05 à 2,0% en poids ou de la polyvinylpyrrolidone en une proportion de 0,01 à 0,15%, rapportée respectivement à la masse de l'enduit (18).

8. Tuyau (1) souple d'insertion suivant la revendication 1 ou l'une des revendications précédentes, **caractérisé en ce que** les rayonnements (4) contenant des UV ont une longueur d'ondes de plus de 300 et de moins de 500 nm, notamment de plus de 330 et de moins de 460 nm, de préférence de plus de 360 et de moins de 420 nm.

9. Canalisation (2) rénovée ou conduit rénové, **caractérisé en ce que** la canalisation (2) ou le conduit est habillé d'un tuyau (1) souple d'insertion durci par des rayonnements (4) contenant des UV suivant l'une des revendications précédentes.

Fig.1

Fig.2

**IN DER BESCHREIBUNG AUFGEFÜHRTE DOKUMENTE**

**In der Beschreibung aufgeführte Patentdokumente**

- WO 0050801 A2
- DE 3546417 A1
- DD 133953
- EP 1443257 A1